# EUROPEAN PATENT SPECIFICATION

(11) **EP 3 165 997 B1**
(45) Date of publication and mention of the grant of the patent: **27.05.2020**
(21) Application number: 15192948.6
(22) Date of filing: 04.11.2015
(51) Int. Cl.: G06F 3/0354, G06F 3/038, G06F 3/01, G06F 1/16

(54) **AUTOMOTIVE INPUT APPARATUS COMPRISING A TOUCH SENSITIVE INPUT DEVICE**
AUTOMATISCHE EINGABEVORRICHTUNG MIT BERÜHRUNGSEMPFINDLICHER EINGABEVORRICHTUNG
APPAREIL D'ENTRÉE D'AUTOMOBILE COMPRENANT UN DISPOSITIF D'ENTRÉE SENSIBLE AU TOUCHER

(43) Date of publication of application: 10.05.2017
(73) Proprietor: Alpine Electronics, Inc., Tokyo (JP)
(72) Inventor: Galos, Andreas, 70567 Stuttgart (DE); Bauer, Alexander, 70567 Stuttgart (DE)
(74) Representative: Schmitt-Nilson Schraud Waibel Wohlfrom Patentanwälte Partnerschaft mbB

(56) References cited:
- GB-A- 2 098 805
- US-A1- 2005 007 108
- US-A1- 2006 181 517
- US-A1- 2010 213 288
- US-A1- 2012 313 627
- US-A1- 2013 038 551

## Description

The present invention relates to an automotive input apparatus comprising at least one touch sensitive input device which is operable by a user and has at least one touch surface for sensing a touch of a user's finger for performing at least one input function, wherein the at least one touch surface can be displaced from a first position to at least one second position upon a force applied by a user's finger. The invention further relates to a vehicle comprising such automotive input apparatus.

Input apparatuses comprising such touch sensitive input devices, for example a touch pad or a touch screen, are known in the art in various types. Some of such input apparatuses are designed to provide artificial haptic feedback, that is upon sensing a touch of a user's finger applying a force on the touch pad or touch screen, a sensor detects such force or displacement of the touch pad or touch screen and generates a respective signal for providing a tactile feeling for the user's finger to provide haptic feedback. Typical input devices with artificial haptic feedback, such as touch pads or touch screens, employ a touch force sensing feature. If a user is pressing the input surface hard enough, the haptic feedback action will be triggered.

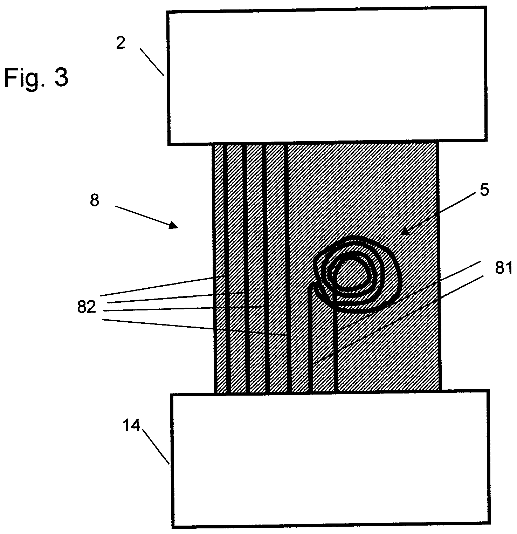

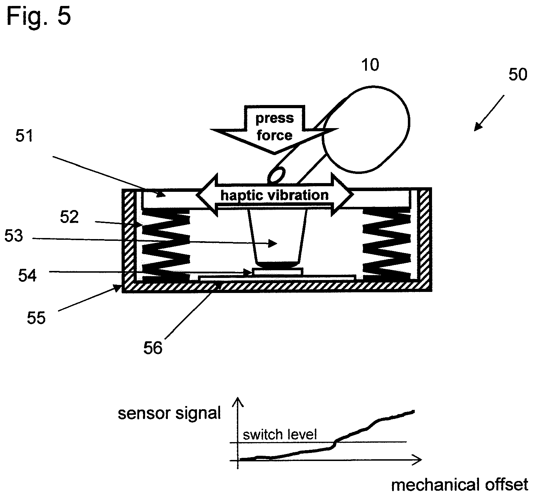

Typically, a touch force sensing feature can be implemented in various forms. Figure 5 shows an input apparatus 50, which comprises a touch pad or touch screen 51 which is supported in a housing 55. The touch pad or touch screen 51 is supported by a spring mechanism 52 which enables that the touch pad or touch screen 51 can be pressed in the direction of a printed circuit board 56 by a user's finger 10. On the printed circuit board 56, for example, a piezo element 54 is arranged which interacts with a pressing dome 53 which is pressed down by the press force applied by user's finger 10. The piezo element 54 performs press force detection, and the spring mechanism 52 provides a counter force so that the touch pad or touch screen 51 resumes its original position after release of the press force. The piezo element 54 can trigger an electric output signal according to the mechanical offset to generate the artificial haptic feedback. For example, such haptic feedback may be a haptic vibration of the touch pad or touch screen 51 generated by a corresponding vibration device which is not shown in Figure 5. As shown in the lower part of Figure 3, once the mechanical offset of the touch pad or touch screen 51 exceeds a particular value, the sensor signal generated by the piezo element 54 exceeds a particular switch level to generate the haptic feedback. The input apparatus 50 may further comprise a micro processor or some other hardware which will decide upon the electrical signal received from the piezo element 54 to trigger the feedback action if the sensor signal is above a certain threshold (switch level).

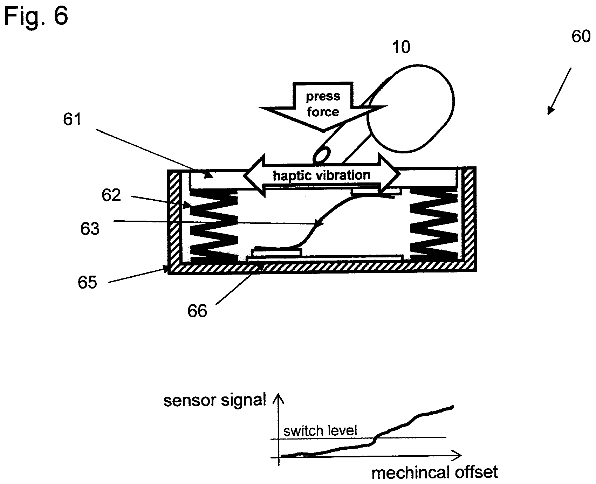

Figure 6 shows a similar input apparatus 60 which comprises a touch pad or a touch screen 61 supported by a spring mechanism 62 in a housing 65. A strain gauge 63 is installed between the touch pad or touch screen 61 and a printed circuit board 66 which generates an electrical signal upon movement of the strain gauge 63 upon a press force by the user's finger 10. The generation of haptic feedback may be similar as that according to Figure 5.

Generally, it is often not desirable, and in some cases even dangerous, to apply mechanical forces to a printed circuit board and electrical components housed in such input apparatus. For example, the printed circuit board and/or electrical components may be damaged by misuse or by accidential high impact, e.g. when the input apparatus is installed in a vehicle and the vehicle is driving over bumpy roads. Further, the printed circuit board and/or electrical components are exposed to wear by natural friction during the haptic feedback action itself which may reduce reliability of the input apparatus over life time.

JP 2013-080364 A discloses a tactile sense presentation and input device in which a conventional touch panel is vibrated by a user touching the touch panel. A display panel for displaying an image for a touch operation and a touch panel provided on the surface of the display panel are supported by a panel support member, and the touch panel is supported to a housing by an elastic support member movably in a vertical direction. By using positional information from a touch panel drive part, a contact position of a finger of a user to the touch panel is controlled such that an actuator drive unit has a different supporting power of the touch panel against a housing of an actuator between the display area of the image for a touch operation and an area other than the display area of the image for a touch operation.

JP 2007-005206 A provides a detecting switch which is hardly effected by moisture and dust, and capable of securing a long service life and a long term reliability. The switch has a detection coil, an LC resonator constituted by the detecting coil and a resonance capacitor, an oscillation circuit to drive the LC resonator, a lever member to transmit the displacement of the object to be detected, a first coil spring fixed to the lever member, relatively displacing against the detection coil, making circular eddy current flow, and a second spring having a spring constant larger than that of the first coil spring practicing over travel. The first coil spring and the second spring energize the lever member, and extends and contracts along axial center of the detection coil. A loop is formed on the first coil spring and circular eddy current is made to flow therethrough, and the object to be detected is detected by oscillating and stopping the LC resonator.

US 2006/181517 A1 discloses an automotive touch screen device which senses the amount of displacement of the touch surface.

It is therefore an object of the present invention to provide an input apparatus, particularly for use in an automotive environment, which offers good performance in detecting displacement of a touch sensitive input device and high reliability over life time.

The invention is defined in the independent claim 1.

Further embodiments are described in the following description relating to the Figures, in which:
- Figure 1: shows a schematical cross-sectional view of an automotive input apparatus according to an embodiment of the invention,
- Figure 2: shows a simplified circuit model of an inductive position sensor as employed in an automotive input apparatus according to an embodiment of the invention,
- Figure 3: shows a schematical view of a sensing coil which is provided in a cable, such as a ribbon cable or flat cable, according to an embodiment of the invention,
- Figure 4: shows schematical cross-sectional views of an input apparatus according to various embodiments of the invention,
- Figure 5: shows a cross-sectional view of a known input apparatus according to the prior art employing a piezo element as force detection element for providing artificial feedback, such as haptic feedback,
- Figure 6: shows a cross-sectional view of another implementation according to the prior art of an input apparatus employing a strain gauge for press force detection.

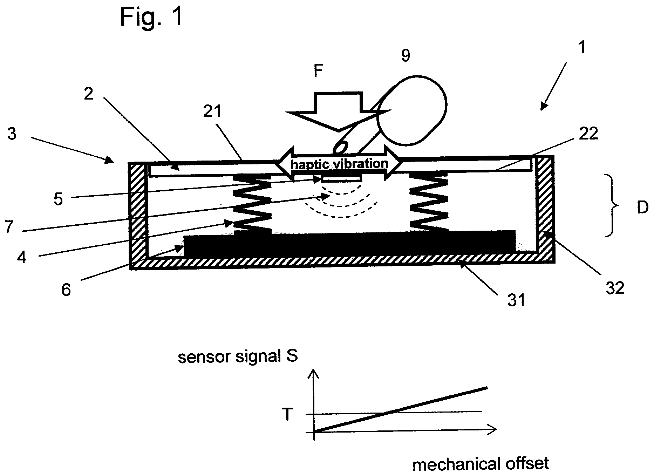

Figure 1 shows an embodiment of an automotive input apparatus 1 in a cross-sectional view. The skilled person will note that Figure 1 only shows a schematical exemplary embodiment which is not to scale, wherein various modifications and adaptations may be made depending on the particular practical circumstances.

The automotive input apparatus 1 as shown in Figure 1 comprises at least one touch sensitive input device 2. For example, the touch sensitive input device 2 is a touch pad or a touch screen, and has at least one touch surface 21 for sensing a touch of a user's finger 9. Particularly, the touch sensitive input device 2 comprises a display (which forms at least part of the touch surface 21), and the touch sensitive input device 2 is configured to display an image for a touch operation by the user on the display (or touch surface 21, respectively). For example, upon touching the image on the display, a particular input function is triggered by the input apparatus 1 to be performed by the input apparatus or another unit, e.g. a media reproduction system. For instance, the user's finger 9 touches the touch surface 21 for performing at least one input function, for example when touching or pressing a displayed "button" or, generally, a touch area displayed on the touch surface 21. Upon touching the touch surface 21, the user's finger 9 applies a pressing force F on the touch surface 21 such as to cause the touch surface 21 to be displaced from a first position (the default position) to at least one second position, which may be closer to the bottom part of the housing 3. In other words, when applying the press force F on the touch surface 21, the touch sensitive input device 2 is pressed downwards, so that a distance between a sensing coil 5 and a metal portion 6 of the input apparatus 1 becomes smaller.

The touch sensitive input device 2 is supported by at least one resilient supporting device 4, in the present example by a spring mechanism comprising two coil springs 4. Such resilient supporting device allows displacement of the touch surface 21 transversely, preferably perpendicularly, to a longitudinal extension of the touch surface 21 from the default position to a second position in which, in this embodiment, the haptic feedback is generated. Particularly, the longitudinal extension of the touch surface 21 is an extension in the plane of the touch surface 21 like one of the x- and y-directions of an x-y-plane lying in the touch surface 21. Once the finger 9 releases its press force F from the touch surface 21, the resilient supporting device 4, in the present example the coil springs cause the touch surface 21 to move back to its default position in the direction opposite to the previous pressing direction.

The touch sensitive input device 2 is arranged in a housing 3 which is formed, for example, from metal. The housing 3 comprises sled walls 31 and 32. For example, the sled wall 31 is a ground plate of the housing 3 which is arranged such as to face the side 22 of the touch sensitive input device 2 which is opposite to the touch surface 21. In the present case, the touch sensitive input device 2 is a flat panel or screen, and the touch surface 21 and the side 22 are the opposite flat sides of the panel or screen. On the ground plate 31, there may be arranged some further metal parts of the housing, such as a metal structure 6 like an inner frame of the housing and/or some other metal parts of the input apparatus used for the functioning thereof, which can also be used as target for the sensing coil 5.

According to an embodiment, the metal portion which interacts with the sensing coil 5 may form at least part of the ground plate 31 of the housing 3 and is arranged facing the side 22 of the touch sensitive input device 2 which is opposite to the touch surface 21. For example, the sensing coil 5 is arranged on the under side 22 of the touch sensitive input device 2 and may be moved by the press force F towards a metal portion formed by the metal structure 6 and/or ground plate 31. With displacing the touch sensitive input device 2 by the press force F the air gap 7 (distance D) between sensing coil 5 and metal portion 6, 31 becomes smaller.

According to an embodiment, the inductive position sensor is configured to generate a sensor signal S which varies with varying distance of the sensing coil 5 to the metal portion 6, 31 (for example, in linear fashion; other configurations may result in other characteristics), and to generate at least one output signal OS if the sensor signal S exceeds or falls below a threshold value T.

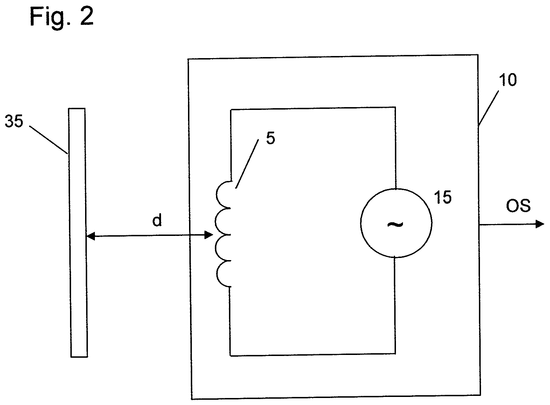

In this respect, Figure 2 shows a simplified circuit model of an inductive position sensor 10 as used according to embodiments of the present invention. Inductive position sensor 10 comprises sensing coil 5, which may be arranged in an input apparatus as shown according to the embodiment of Figure 1, e.g. on the under side 22 of the touch sensitive input device 2. A voltage source 15 provides an alternating current to the sensing coil 5, so that an AC current is flowing through the sensing coil 5 which will generate an AC magnetic field. If a conductive material, such as a metal target 35 (e.g. metal portions 6 and 31, as shown in Figure 1), is brought into the vicinity of the sensing coil 5, this magnetic field will induce circulating currents (eddy currents) on the surface of the target. These eddy currents are a function of the distance d, size, and composition of the metal target 35. The eddy currents then generate their own magnetic field, which opposes the original field generated by the sensing coil 5. This mechanism can be compared to a transformer, where the sensing coil 5 is the primary core and the eddy current is the secondary core. The inductive coupling between both cores depends on distance and shape. Hence, the resistance and inductance of the secondary core (eddy current) shows up as a distance dependent resistive and inductive component on the primary side (sensing coil 5). The varying inductance of the sensing coil 5 can be measured either directly, or equivalent parameters may be measured, for example generated within the inductive position sensor 10 with particular electronic components connected with the circuit of current source 15 and sensing coil 5.

According to an embodiment, an inductance-to-digital converter of the type LDC1000 manufactured by Texas Instruments may be used as inductive position sensor 10. Further details can be taken from the data sheet of LDC1000 inductance-to-digital converter "LDC1000 SNOSCX2B - September 2013 - Revised March 2015" from Texas Instruments, Dallas, Texas 75265, and which may be accessed under http://www.ti.com/product/ldc1000, and which is incorporated herein by reference. In particular, it is referred to sections 3, 6, and 7 (7.1 - 7.3) thereof.

The inductive position sensor 10 may include, for example, a microprocessor which is configured to calculate the respective electrical parameters which are appropriate to make any conclusions on the distance d of the sensing coil 5 from the metal target 35, as schematically shown in Figure 2. Once the displacement from the first position to the second position of the touch surface 21 is detected by the position sensor 10, the position sensor 10 generates at least one output signal OS for triggering, in this embodiment, the tactile feeling or haptic feedback action. For example, the output signal OS is coupled to a vibrator which causes haptic vibration of the touch sensitive input device 2, for example in the x-y-plane of the touch surface 21. According to other embodiments, similarly one or more acoustic feedback signals and/or optical feedback signals may be generated by a loudspeaker and/or a light source, such as a LED. For example, the loudspeaker and/or optical light source may be dedicated for such feedback, and may be provided in close vicitity of the input apparatus. For example, they may be integrated in the input apparatus. An acoustic feedback signal could be one or more tones generated by the loudspeaker upon a touch of a user's finger. An optical feedback signal could be one or more light signals from a light source, such as one or more light blinking signals, upon a touch of a user's finger. For example, the output signal OS is coupled to such loudspeaker (or amplifier thereof) and/or such light source, which are not shown in the drawings.

In the embodiment according to Figure 1, for example, the sensing coil 5 is arranged so that it faces the metal portion 6 (in case of additional metal structures on the ground plate 31), or the metal portion in the form of the ground plate 31 directly, wherein the inductive position sensor 10 generates the output signal OS upon approximation of the sensing coil 5 relative to the metal portion 6 or 31, respectively.

According to an embodiment, the sensing coil 5 is attached to the surface 22 of the touch sensitive input device 2 which is opposite to the touch surface 21, in the present case attached to the under side of the touch sensitive input device 2. According to another embodiment, the sensing coil 5 may be arranged on a printed circuit board (not shown in Figure 1) which is attached at the touch sensitive input device 2 at the side opposite to the touch surface 21, i.e. in the present case at the under side 22.

According to another embodiment, the sensing coil 5 may be arranged in a cable which is disposed between the touch sensitive input device 2 and the respective metal portion. Preferably, such cable is a ribbon cable which is provided between the touch sensitive input device 2 and electronic parts within the housing 3 which are used within the input apparatus 1 for performing the input functions thereof. Particularly, a ribbon cable may be provided between the touch sensitive input device 2 and a control circuit of the input apparatus 1 which provides corresponding output and control signals to be input to some other circuit or units, the functions of which may be controlled by the input apparatus 1. Preferably, according to embodiments of the invention, the sensing coil 5 may be part of such ribbon cable, wherein a first plurality of conductors of the ribbon cable are forming the sensing coil and a second plurality of the conductors of the ribbon cable are connecting the touch sensitive input device 2 to a control circuit of the input apparatus implementing the touch sensor technology of the touch sensitive input device. Such solution is quite cost effective since the sensing coil can be printed into a ribbon cable quite easily. According to the particular circumstances, the windings of the sensing coil may be adapted in shape and/or number to the respective needs.

According to an embodiment, the sensing coil 5 is arranged at a distance of between 1 and 5 mm to the metal portion, preferably at a distance of 1 - 3 mm. When using the LDC1000 position sensor, as described above, the distance between the sensing coil and the metal portion may be 5 mm resulting in a resolution of 15 µm, wherein the diameter of the metal portion (target) should be approximately 5 cm. Preferably, the material of the metal portion (target) is stainless steel.

Figure 3 shows a schematical view of a sensing coil 5 which is provided in a cable 8, such as a ribbon cable or flat cable. Such ribbon cable 8 is typically provided between the touch sensitive input device 2 and a control circuit (not shown) of the input apparatus 1 for interconnecting the touch sensitive input device 2 and the control circuit and implementing the touch sensing technology and functionality of the input device. For example, the ribbon cable 8 is connected to the touch sensitive input device 2 and to a printed circuit board 14 which, e.g., is connected to the control circuit, or has the control circuit implemented thereon as an integrated circuit. A first plurality of conductors 81 of the ribbon cable 8 is forming the sensing coil 5 and a second plurality of conductors 82 of the ribbon cable 8 are interconnecting the touch sensitive input device 2 and the control circuit of the input apparatus 1. For example, the sensing coil 5 can be integrated into a LCD connection flat cable (in case the touch sensitive input device 2 is a LCD panel). Such solution provides very low manufacturing costs and avoids provision of a dedicated loop part.

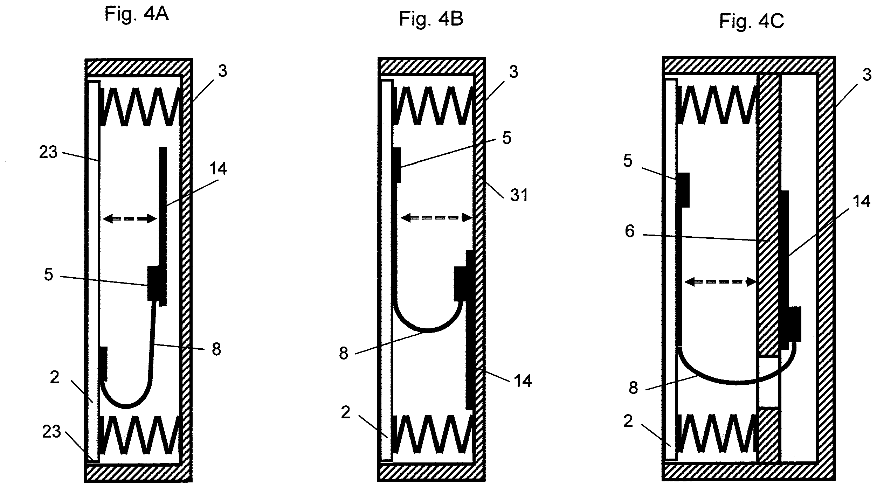

Figure 4 shows schematical cross-sectional views of an input apparatus according to various embodiments of the invention. These embodiments are based in principle on the embodiment as shown according to Fig. 1, but can be applied analogously also in other arrangements of an input apparatus.

According to the embodiment of Fig. 4A, the sensing coil 5 is arranged on the printed circuit board 14 (such as one explained above with reference to Fig. 3). The position sensor 10 is detecting the distance of the sensing coil 5 to a metal housing 23 of the touch sensitive input device 2 (such as a LCD panel). For example, such metal housing 23 may be or may comprise a metal frame including a metal ground plate of the panel facing the sensing coil 5.

According to the embodiment of Fig. 4B, the sensing coil 5 is arranged in the ribbon cable 8 , wherein the position sensor 10 is detecting the distance of the sensing coil 5 to the metal housing 3 (in particular the ground plate 31) of the input apparatus 1. The printed circuit board 14 may be arranged on the ground plate 31 of the metal housing 3 in an area outside of the detecting range of the sensing coil 5.

According to the embodiment of Fig. 4C, the sensing coil 5 is arranged in the ribbon cable 8, wherein the position sensor 10 is detecting the distance of the sensing coil 5 to a metal structure 6, which is a carrier structure inside the housing 3, inside the input apparatus 1. The printed circuit board 14 may be arranged on the back side of such metal carrier structure 6, i.e. on a side facing away from the detecting range of the sensing coil 5.

With provision of the inductive position sensor in an input apparatus according to the invention, a contact-less, short-range sensing technology can be provided for providing the haptic, acoustic and/or optical feedback to the user upon pressing the touch sensitive input device that enables low-cost, high-resolution sensing of the displacement of the touch sensitive input device. According to the invention, no mechanical stress is applied on a printed circuit board and/or electrical components for processing any position sensor signals. Further, in designing the input apparatus, one has freedom to locate the printed circuit board anywhere in the product, since there is no need to relate to any mechanical connection with a pressure sensor . Moreover, the input apparatus is easy to design, easy to assemble due to no need to match any sensor counter-part . In addition, calibration errors during usage may not occur, because the inductive position sensor can easily be re-calibrated. The input apparatus according to the invention provides better performance and reliability at lower cost as compared to the prior art solutions as described above with reference to Figures 5 and 6.

## Claims

1. Automotive input apparatus (1) comprising:
- at least one touch sensitive input device (2) which is operable by a user and has at least one touch surface (21) for sensing a touch of a user's finger (9) for performing at least one input function,
- wherein the at least one touch sensitive input device (2) is arranged in a housing (3, 23) and is arranged such as to allow displacement of the at least one touch surface (21) from a first position to at least one second position upon a force (F) applied by the user's finger on the at least one touch surface (21), and to provide at least one of a tactile feeling for the user's finger (9), an acoustic feedback signal and an optical feedback signal upon the displacement,
- at least one inductive position sensor (10) which comprises a sensing coil (5) configured to interact with a metal portion (6, 23, 31, 35) of the input apparatus (1), wherein an inductance of the sensing coil (5) is variable in accordance with a distance between the sensing coil (5) and the metal portion (6, 23, 31, 35), wherein the metal portion (6, 23, 31, 35) forms at least part of the housing (3),
- wherein the sensing coil (5) is arranged at a side (22) of the touch sensitive input device (2) which is opposite to the touch surface (21), and one of the sensing coil (5) and the metal portion (6, 23, 31, 35) is arranged to be displaced relative to the other of the sensing coil (5) and the metal portion (6, 23, 31, 35) with the displacement of the touch surface (21),
- wherein the inductive position sensor (10) is configured to generate at least one output signal (OS) for triggering the respective tactile feeling, acoustic feedback signal or optical feedback signal upon sensing a relative displacement of the sensing coil (5) and the metal portion (6, 23, 31, 35),
- wherein the sensing coil (5) is arranged in a cable (8) which is disposed between the touch sensitive input device (2) and the metal portion (6, 23, 31, 35),
- wherein the cable is a ribbon cable (8), and a first plurality of conductors (81) of the ribbon cable are forming the sensing coil (5) and a second plurality of the conductors (82) of the ribbon cable are connecting the touch sensitive input device (2) to a control circuit of the input apparatus (1).

2. The automotive input apparatus according to claim 1, wherein
- the sensing coil (5) is attached at a side (22) of the touch sensitive input device (2) which is opposite to the touch surface (21) and is arranged to be displaced relative to the metal portion (6, 31, 35) with the displacement of the touch surface (21), and
- the inductive position sensor (10) is configured to generate the at least one output signal (OS) for triggering the respective tactile feeling, acoustic feedback signal or optical feedback signal upon sensing a displacement of the sensing coil (5) relative to the metal portion (6, 31, 35).

3. The automotive input apparatus according to one of claims 1 or 2, wherein the metal portion forms at least part of a ground plate (31) or metal structure (6) of the housing (3) which is arranged facing the side (22) of the touch sensitive input device which is opposite to the touch surface (21).

4. The automotive input apparatus according to one of claims 1 to 3, wherein the sensing coil (5) is arranged such that it faces the metal portion (6, 23, 31, 35), and the inductive position sensor (10) is configured to generate the at least one output signal (OS) upon approximation of the sensing coil (5) relative to the metal portion (6, 23, 31, 35).

5. The automotive input apparatus according to one of claims 1 to 4, wherein the sensing coil (5) is arranged at a distance of between 1 and 5 mm to the metal portion (6, 23, 31, 35), preferably at a distance of 1 - 3 mm.

6. The automotive input apparatus according to one of claims 1 to 5, wherein the inductive position sensor (10) is configured to generate a sensor signal (S) which varies with varying distance of the sensing coil (5) to the metal portion (6, 31, 35), and to generate the at least one output signal (OS) if the sensor signal exceeds or falls below a threshold value (T).

7. The automotive input apparatus according to one of claims 1 to 6, wherein
- the at least one touch sensitive input device (2) is supported by at least one resilient supporting device (4),
- wherein the at least one supporting device (4) is arranged such as to allow displacement of the touch surface (21) transversely, preferably perpendicularly, to a longitudinal extension of the touch surface (21) from the first position to the second position.

8. The automotive input apparatus according to one of claims 1 to 7, wherein the touch sensitive input device (2) is one of a touch pad and a touch screen.

9. A vehicle comprising an automotive input apparatus (1) according to any of the preceding claims.

## Patentansprüche

1. Kraftfahrzeug-Eingabevorrichtung (1), aufweisend:
- mindestens eine berührungsempfindliche Eingabeeinrichtung (2), die von einem Benutzer betätigt werden kann und mindestens eine Berührungsfläche (21) zum Erfassen einer Berührung des Fingers (9) eines Benutzers aufweist, um mindestens eine Eingabefunktion auszuführen,
- wobei die mindestens eine berührungsempfindliche Eingabeeinrichtung (2) in einem Gehäuse (3, 23) angeordnet ist und derart ausgebildet ist, dass eine Verschiebung der mindestens einen Berührungsfläche (21) von einer ersten Position in mindestens eine zweite Position möglich ist, wenn eine Kraft (F) durch den Finger des Benutzers auf die mindestens eine Berührungsfläche (21) aufgebracht wird, sowie dazu ausgebildet ist, mindestens eines von einem taktilen Gefühl für den Finger (9) des Benutzers, einem akustischen Rückmeldungssignal und einem optischen Rückmeldungssignal bei der Verschiebung bereitzustellen,
- mindestens einen induktiven Positionssensor (10), der eine Erfassungsspule (5) aufweist, die dazu ausgebildet ist, mit einem Metallbereich (6, 23, 31, 35) der Eingabevorrichtung (1) zusammenzuwirken, wobei eine Induktivität der Erfassungsspule (5) in Abhängigkeit von einem Abstand zwischen der Erfassungsspule (5) und dem Metallbereich (6, 23, 31, 35) variabel ist, wobei der Metallbereich (6, 23, 31, 35) zumindest Teil des Gehäuses (3) bil - det,
- wobei die Erfassungsspule (5) auf einer der Berührungsfläche (21) gegen - überliegenden Seite (22) der berührungsempfindlichen Eingabeeinrichtung (2) angeordnet ist, und wobei ein Element von der Erfassungsspule (5) und dem Metallbereich (6, 23, 31, 35) dazu ausgebildet ist, bei der Verschie - bung der Berührungsfläche (21) relativ zu dem jeweils anderen Element von der Erfassungsspule (5) und dem Metallbereich (6, 23, 31, 35) verschoben zu werden,
- wobei der induktive Positionssensor (10) dazu ausgebildet ist, mindestens ein Ausgangssignal (OS) zum Auslösen des jeweiligen taktilen Gefühls, akustischen Rückmeldungssignals oder optischen Rückmeldungssignals bei Erfassung einer relativen Verschiebung der Erfassungsspule (5) und des Metallbereichs (6, 23, 31, 35) zu erzeugen,
- wobei die Erfassungsspule (5) in einem Kabel (8) angeordnet ist, das zwi - schen der berührungsempfindlichen Eingabeeinrichtung (2) und dem Metall - bereich (6, 23, 31, 35) angeordnet ist,
- wobei das Kabel ein Bandkabel (8) ist und eine erste Mehrzahl von Leitern (81) des Bandkabels die Erfassungsspule (5) bildet und eine zweite Mehr - zahl von Leitern (82) des Bandkabels die berührungsempfindliche Eingabe - einrichtung (2) mit einer Steuerschaltung der Eingabevorrichtung (1) verbin - det.

2. Kraftfahrzeug-Eingabevorrichtung nach Anspruch 1,
- wobei die Erfassungsspule (5) auf einer der Berührungsfläche (21) gegen - überliegenden Seite (22) der berührungsempfindlichen Eingabeeinrichtung (2) angebracht ist und dazu ausgebildet ist, bei der Verschiebung der Be - rührungsfläche (21) relativ zu dem Metallbereich (6, 31, 35) verschoben zu werden, und
- wobei der induktive Positionssensor (10) dazu ausgebildet ist, das mindestens eine Ausgangssignal (OS) zum Auslösen des jeweiligen taktilen Gefühls, akustischen Rückmeldungssignals oder optischen Rückmeldungssignals bei Erfassung einer Verschiebung der Erfassungsspule (5) relativ zu dem Metallbereich (6, 23, 31, 35) zu erzeugen.

3. Kraftfahrzeug-Eingabevorrichtung nach einem der Ansprüche 1 oder 2,
wobei der Metallbereich zumindest Teil einer Grundplatte (31) oder Metallstruktur (6) des Gehäuses (3) bildet, der der Seite (22) der berührungsempfindlichen Eingabeeinrichtung zugewandt angeordnet ist, die der Berührungsfläche (21) gegenüberliegt.

4. Kraftfahrzeug-Eingabevorrichtung nach einem der Ansprüche 1 bis 3,
wobei die Erfassungsspule (5) derart angeordnet ist, dass sie dem Metallbereich (6, 23, 31, 35) zugewandt ist und der induktive Positionssensor (10) dazu ausgebildet ist, das mindestens eine Ausgangssignal (OS) bei Annäherung der Erfassungsspule (5) relativ zu dem Metallbereich (6, 23, 31, 35) zu erzeugen.

5. Kraftfahrzeug-Eingabevorrichtung nach einem der Ansprüche 1 bis 4,
wobei die Erfassungsspule (5) in einem Abstand zwischen 1 und 5 mm von dem Metallbereich (6, 23, 31, 35) angeordnet ist, vorzugsweise in einem Abstand von 1 - 3 mm.

6. Kraftfahrzeug-Eingabevorrichtung nach einem der Ansprüche 1 bis 5,
wobei der induktive Positionssensor (10) dazu ausgebildet ist, ein Sensorsi - gnal (S) zu erzeugen, das sich mit sich änderndem Abstand der Erfas - sungsspule (5) zu dem Metallbereich (6, 31, 35) ändert, sowie das mindes - tens eine Ausgangssignal (OS) zu erzeugen, wenn das Sensorsignal einen Schwellwert (T) überschreitet oder unterschreitet.

7. Kraftfahrzeug-Eingabevorrichtung nach einem der Ansprüche 1 bis 6,
- wobei die mindestens eine berührungsempfindliche Eingabeeinrichtung (2) von mindestens einer elastischen Abstützeinrichtung (4) abgestützt ist,
- wobei die mindestens eine Abstützeinrichtung (4) derart angeordnet ist, dass sie eine Verschiebung der Berührungsfläche (21) quer, vorzugsweise rechtwinklig, zu einer Längserstreckung der Berührungsfläche (21) von der ersten Position in die zweite Position ermöglicht.

8. Kraftfahrzeug-Eingabevorrichtung nach einem der Ansprüche 1 bis 7,
wobei es sich bei der berührungsempfindlichen Eingabeeinrichtung (2) um eines von einem Berührungsfeld und einem Berührungsbildschirm handelt.

9. Fahrzeug mit einer Kraftfahrzeug-Eingabevorrichtung (1) nach einem der vorhergehenden Ansprüche.

## Revendications

1. Périphérique d'entrée (1) destiné à un véhicule automobile, comprenant :
au moins un dispositif d'entrée (2) sensible au toucher, qui peut être actionné par un utilisateur et qui possède au moins une surface tactile (21) pour la détection d'un contact avec le doigt d'un utilisateur (9) pour la mise en œuvre d'au moins une fonction d'entrée ;
dans lequel ledit au moins un dispositif d'entrée (2) sensible au toucher est disposé dans un logement (3, 23) et est conçu de façon à permettre un déplacement de ladite au moins une surface tactile (21) à partir d'une première position jusqu'à au moins une deuxième position lorsqu'une force (F) s'exerce par l'intermédiaire du doigt de l'utilisateur sur ladite au moins une surface tactile (21), et pour procurer au moins un élément choisi parmi une sensation tactile pour le doigt de l'utilisateur (9), un signal acoustique de rétroaction et un signal optique de rétroaction, qui accompagne le déplacement ;
au moins un capteur de position par induction (10) qui comprend une bobine de détection (5) configurée pour entrer en interaction avec une portion métallique (6, 23, 31, 35) du périphérique d'entrée (1) ; dans lequel une inductance de la bobine de détection (5) est variable en fonction d'une distance s'étendant entre la bobine de détection (5) et la portion métallique (6, 23, 31, 35) ; dans lequel la portion métallique (6, 23, 31, 35) forme au moins une partie du logement (3) ;
- dans lequel la bobine de détection (5) est disposée sur un côté (22) du dispositif d'entrée (2) sensible au toucher, qui est opposé à la surface tactile (21), et un élément choisi parmi la bobine de détection (5) et la portion métallique (6, 23, 31, 35) est conçu pour pouvoir être déplacé par rapport à l'autre élément choisi parmi la la bobine de détection (5) et la portion métallique (6, 23, 31, 35) de manière conjointe avec le déplacement de la surface tactile (21) ;
- dans lequel le capteur de position par induction (10) est configuré pour générer au moins un signal de sortie (OS) destiné à déclencher respectivement la sensation tactile, le signal de rétroaction acoustique ou le signal de rétroaction optique lors de la détection d'un déplacement relatif de la bobine de détection (5) et de la portion métallique (6, 23, 31, 35) ;
- dans lequel la bobine de détection (5) est disposée dans un câble (8) qui est monté entre le dispositif d'entrée (2) sensible au toucher et la portion métallique (6, 23, 31, 35) ;
dans lequel le câble est un câble ruban (8), et un premier ensemble de conducteurs (81) du câble ruban forment la bobine de détection (5) et un second ensemble des conducteurs (82) du câble ruban relient le dispositif d'entrée (2) sensible au toucher à un circuit de commande du périphérique d'entrée (1).

2. Périphérique d'entrée destiné à un véhicule automobile selon la revendication 1, dans lequel
- la bobine de détection (5) est fixée à un côté (22) du dispositif d'entrée (2) sensible au toucher, qui est opposé à la surface tactile (21) et est conçue pour être déplacée par rapport à la portion métallique (6, 31, 35) de manière conjointe avec le déplacement de la surface tactile (21) ; et
- le capteur de position par induction (10) est configuré pour générer ledit au moins un signal de sortie (OS) destiné à déclencher respectivement la sensation tactile, le signal de rétroaction acoustique ou le signal de rétroaction optique lors de la détection d'un déplacement de la bobine de détection (5) par rapport à la portion métallique (6, 31, 35).

3. Périphérique d'entrée destiné à un véhicule automobile selon l'une quelconque des revendications 1 ou 2, dans lequel la portion métallique forme au moins une partie d'une plaque de mise à la terre (31) ou d'une structure métallique (6) du logement (3), qui est disposée pour faire face au côté (22) du dispositif d'entrée sensible au toucher, qui est opposé à la surface tactile (21).

4. Périphérique d'entrée destiné à un véhicule automobile selon l'une quelconque des revendications 1 à 3, dans lequel la bobine de détection (5) est disposée d'une manière telle qu'elle fait face à la portion métallique (6, 23, 31, 35), et le détecteur de position par induction (10) est configuré pour générer ledit au moins un signal de sortie (OS) lorsque la bobine de détection (5) se rapproche de la portion métallique (6, 23, 31, 35).

5. Périphérique d'entrée destiné à un véhicule automobile selon l'une quelconque des revendications 1 à 4, dans lequel la bobine de détection (5) est disposée à une distance entre 1 et 5 mm par rapport à la portion métallique (6, 23, 31, 35), de préférence à une distance de 1 à 3 mm.

6. Périphérique d'entrée destiné à un véhicule automobile selon l'une quelconque des revendications 1 à 5, dans lequel le capteur de position par induction (10) est configuré pour générer un signal de détection (S) qui varie en fonction de la variation de la distance de la bobine de détection (5) par rapport à la portion métallique (6, 31, 35), et pour générer ledit au moins un signal de sortie (OS) lorsque le signal de détection dépasse une valeur seuil (T) ou tombe en dessous de ladite valeur.

7. Périphérique d'entrée destiné à un véhicule automobile selon l'une quelconque des revendications 1 à 6, dans lequel
- ledit au moins un dispositif d'entrée (2) sensible au toucher est supporté par au moins un dispositif de support résilient (4) ;
- dans lequel ledit au moins un dispositif de support (4) est conçu pour permettre le déplacement de la surface tactile (21) en direction transversale, de préférence en direction perpendiculaire, pour obtenir une extension longitudinale de la surface tactile (21) à partir de la première position jusqu'à la seconde position.

8. Périphérique d'entrée destiné à un véhicule automobile selon l'une quelconque des revendications 1 à 7, dans lequel le dispositif d'entrée (2) sensible au toucher est un pavé tactile ou un écran tactile.

9. Véhicule comprenant un périphérique d'entrée (1) destiné à un véhicule automobile, selon l'une quelconque des revendications précédentes.
